# DEMANDE DE BREVET EUROPEEN

(11) **EP 1 721 845 A1**
(43) Date de publication de la demande: **15.11.2006**
(21) Numéro de dépôt: 06290718.3
(22) Date de dépôt: 04.05.2006
(51) Int. Cl.: B65G 53/52, B65G 53/58, F16L 43/00, A01F 25/18

(54) **Raccord coudé de dépotage pour l'alimentation pneumatique d'un silo de stockage de produit pulvérulent**

(30) Priorité: 04.05.2005 FR 0504537
(71) Demandeur: SARL DF Process, 79100 Thouars (FR)
(72) Inventeur: Feramus, Didier, 62575 Blendecques (FR)

(57) **Abrégé**

Ce raccord comporte un élément tubulaire courbe avec une partie amont (44) reliée à une conduite pressurisée de dépotage et une partie aval (46) montée en partie supérieure du silo. L'élément tubulaire présente transversalement un contour fermé de section (48) variable régulièrement croissante de la partie amont vers la partie aval. Ce raccord est formé d'une gaine (24) définissant une paroi de fond (28) et des parois latérales, assemblé à un couvercle amovible (26) définissant côté extrados une paroi supérieure (36). Gaine et couvercle comprennent des moyens démontables de solidarisation mutuelle et à la partie supérieure du silo. Le couvercle amovible est en un matériau de résistance mécanique et/ou d'épaisseur de paroi plus élevée que la gaine.

## Description

L'invention concerne la manipulation et le stockage des produits pulvérulents.

Plus précisément, l'invention concerne l'alimentation pneumatique d'un produit pulvérulent amené par une conduite pressurisée de transfert vers un silo de stockage.

Les silos sont généralement des cylindres de grande hauteur alimentés en produit pulvérulent depuis leur sommet. La conduite de transfert a la forme d'un tube courant le long du silo depuis la base de celui-ci jusqu'à son sommet, et terminée en demi-cercle de manière à pouvoir diriger le flux de produit verticalement vers le bas à l'endroit du raccordement entre la conduite de dépotage et le plafond du silo.

Pour assurer un débit important dans la conduite, qui est une conduite de faible diamètre (par exemple 110 mm), la pression de transfert est relativement élevée, ce qui conduit à des vitesses très importantes du produit pulvérulent, de l'ordre de 30 m/s. Cette vitesse élevée entraîne un dépotage relativement brusque dans le silo, qui peut amener un certain nombre d'inconvénients.

Ainsi, il existe un risque de tassement du produit dans le silo, surtout en fin de remplissage du silo du fait de l'espace réduit entre le débouché de la conduite de dépotage et le niveau supérieur du produit stocké dans le silo. Des précautions doivent même être prises en fin de stockage pour pallier tout risque de colmatage ou de bouchage des conduites.

Par ailleurs, la vitesse de transfert élevée entraîne une émission importante de poussières à l'arrivée du produit dans le silo, et il est nécessaire d'en tenir compte notamment pour le dimensionnement des filtres et l'environnement de travail des sondes de niveau, généralement des sondes à ultrasons.

Enfin, la vitesse élevée du produit pulvérulent crée dans la partie courbe au sommet de la conduite des frottements importants, notamment lorsqu'il s'agit de produits corrosifs ou mécaniquement agressifs, avec échauffement et usure corrélatifs de la conduite.

L'invention a pour but de remédier à ces divers inconvénients en proposant un raccord de dépotage pour un système d'alimentation pneumatique d'un silo de stockage de produit pulvérulent, qui offre les avantages suivants :
- alimentation plus régulière du produit dans le silo, éliminant tout risque de tassement du produit ou de bouchage de la conduite ;
- du fait de cette alimentation plus régulière, émission réduite de poussières à l'arrivée du produit dans le silo, permettant de réduire les dimensions du filtre (et donc le coût correspondant) et d'améliorer le fonctionnement des sondes de niveau, qui pourront travailler dans un environnement moins poussiéreux ;
- réduction de la perte de charge du circuit pneumatique, permettant de réduire d'autant la pression de transport et, par voie de conséquence, la consommation énergétique et le temps de dépotage ;
- moindre frottement du produit sur les parois de la conduite, qui s'échauffe et s'use moins ;
- possibilité de renforcer spécifiquement les régions les plus exposées à la corrosion ou à l'usure ;
- possibilité de réaliser ces régions sous forme de pièces d'usure remplaçables isolément, sans qu'il soit nécessaire de procéder à un échange complet du raccord ;
- conception assurant un entretien et une maintenance facilités, pouvant être par exemple effectués à l'occasion d'un simple arrêt de production.

Le raccord de l'invention est un raccord coudé de dépotage comprenant, de manière en elle-même connue, un élément tubulaire courbe avec une partie amont comprenant une bouche d'entrée apte à être reliée à une conduite de transfert pressurisée, et une partie aval comprenant une bouche de sortie apte à être montée en partie supérieure du silo pour mise en communication avec le volume intérieur de celui-ci.

De façon caractéristique de l'invention, l'élément tubulaire présente transversalement un contour fermé de section variable, régulièrement croissante de la partie amont vers la partie aval.

La section transversale de l'élément tubulaire est de préférence une section carrée, l'élément tubulaire courbe étant coudé à 90° et s'étendant dans un plan vertical, avec la bouche d'entrée orientée horizontalement et la bouche de sortie orientée verticalement vers le bas, avec un rayon de courbure d'intrados et un rayon de courbure d'extrados constants.

Dans un mode de réalisation particulièrement avantageux, le raccord comprend d'une part une gaine définissant une paroi de fond et des parois latérales et d'autre part un couvercle amovible définissant une paroi supérieure de l'élément tubulaire courbe. Gaine et couvercle comprennent des moyens démontables de solidarisation mutuelle et des moyens respectifs de solidarisation à la partie supérieure du silo.

Le couvercle amovible, qui est de préférence disposé du côté de l'extrados de l'élément tubulaire, peut comporter sur sa face d'extrados au moins une nervure continue s'étendant dans un plan radial perpendiculairement à la surface du couvercle. Avec deux nervures opposées, il est possible de définir un espace garni d'un matériau de renfort, tel qu'un béton coulé entre les nervures formant parois de coffrage en vis-à-vis.

Le matériau du couvercle amovible peut présenter une résistance mécanique et/ou une épaisseur de paroi plus élevée que pour la gaine.

Enfin, il est possible de prolonger l'élément tubulaire coudé par un déflecteur s'étendant côté extrados au-delà de la bouche de sortie, de préférence un déflecteur solidaire du couvercle amovible.

On va maintenant décrire un exemple de mise en oeuvre du dispositif de l'invention, en référence aux dessins annexés où les mêmes références numériques désignent d'une figure à l'autre des éléments identiques ou fonctionnellement semblables.
La figure 1 est une vue d'ensemble montrant la partie supérieure du silo avec la conduite de dépotage et le raccord selon l'invention.
La figure 2 est une vue en coupe transversale, selon II-II de la figure 3, du raccord de l'invention.
La figure 3 est une vue en élévation du raccord de l'invention.
La figure 4 est une vue en plan de la gaine formant l'un des éléments du raccord selon l'invention.

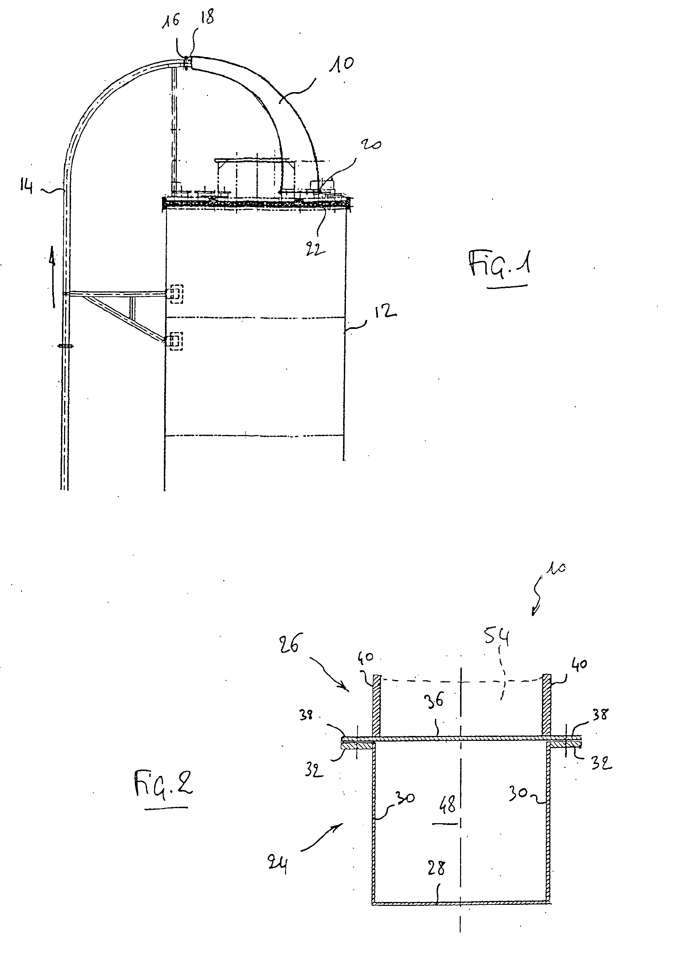

Sur la figure 1, la référence 10 désigne le raccord selon l'invention, qui est un raccord coudé à 90° (valeur non limitative) reliant le sommet d'un silo de stockage 12 en forme de tube cylindrique de grande hauteur, de diamètre 3000 mm par exemple, à une conduite d'alimentation 14 qui est une conduite pressurisée de transfert d'un produit pulvérulent destiné à être stocké dans le silo 12.

La conduite 14 est une conduite cylindrique de faible diamètre, par exemple 110 mm, amenant le produit depuis un point bas situé à la base du silo et remontant le long de celui-ci. Pour diriger le produit à dépoter vers le silo, la conduite 14 se termine par une partie coudée à 90° terminée par une bride 16 raccordée à une bride homologue 18 du raccord 10. En cet endroit, qui constitue la partie amont du raccord, le produit pulvérulent sort de la conduite 14 suivant une direction horizontale et à une vitesse élevée, de l'ordre de 30 m/s. Ce coude est suivi du raccord 10, qui est courbé à 90° pour diriger verticalement vers le bas le flux de produit pulvérulent afin de le décharger en partie supérieure du silo, le raccord 10 étant monté au moyen d'une bride 20 située à son extrémité aval débouchant dans le silo, et solidarisée au toit 22 de celui-ci de manière étanche.

De façon caractéristique de l'invention, la section transversale du raccord 10 est une section variable, augmentant depuis la partie amont raccordée à la conduite 14 jusqu'à la partie aval raccordée au silo 12.

Le raccord a ainsi la forme d'un cornet courbé qui permet, par effet de tuyère, de réduire progressivement la vitesse de transfert du produit, par exemple de 30 m/s en sortie de la conduite 14 à 9 m/s au débouché du raccord 10, à l'arrivée dans le silo.

Ainsi, par la diminution de la vitesse d'arrivée, le produit alimente le silo essentiellement par gravité, sans risque de tassement ni de bouchage et avec une bien moindre émission de poussières.

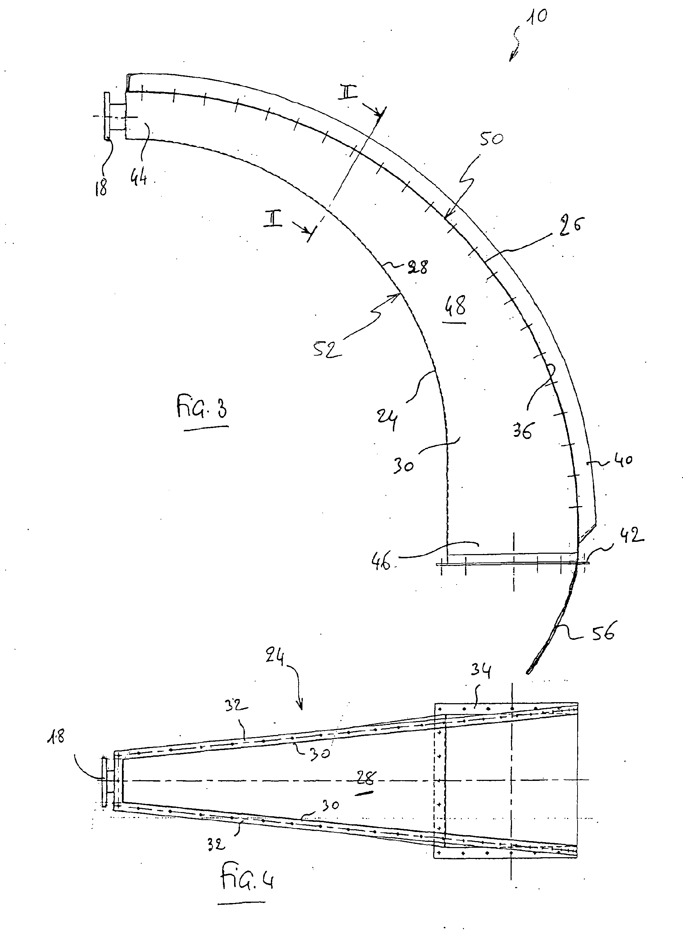

Les figures 2 à 4 montrent plus précisément la structure du raccord coudé 10 selon l'invention.

Avantageusement, le raccord 10 est constitué de deux éléments distincts assemblés de manière démontable, avec un élément intérieur (c'est-à-dire côté intrados du coude) ci-après désigné "gaine" 24, qui est fermée côté extérieur (c'est-à-dire côté extrados du coude) par un couvercle 26. Les deux éléments sont solidarisés entre eux de façon jointive pour former un coude ouvert seulement à ses deux extrémités.

Les figures 2 et 3 montrent gaine et couvercle assemblés, respectivement en coupe transversale et en élévation, tandis que la figure 4 montre la gaine isolément, en plan.

La gaine 24 a une forme générale de goulotte avec une paroi de fond 28 et deux parois latérales planes parallèles 30. La paroi de fond 28 est cylindrique et sa largeur croît régulièrement d'une extrémité à l'autre de la gaine, comme on peut le voir sur la figure 4. La largeur des parois latérales planes 30 croît également de façon régulière, comme on peut le voir sur la vue de la figure 3. La loi de variation de ces largeurs est choisie de manière que, en section droite, la gaine présente un contour rectangulaire, et de préférence carré comme illustré sur la figure 2.

La gaine 24 est ouverte à son extrémité aval, et fermée à son extrémité amont par un raccordement à la bride 18 de liaison à la conduite de transfert. La gaine 24 ainsi constituée définit pour le produit pulvérulent un couloir courbé à 90° assurant le transfert entre une direction d'arrivée horizontale et une direction de sortie verticale.

Les bords libres des parois latérales 30 sont pourvus sur toute leur longueur d'un plat 32 perpendiculaire à la paroi 30, destiné au montage du couvercle 26.

En partie inférieure, dans la région aval destinée à être raccordée au toit du silo, la gaine est pourvue sur ses trois côtés (correspondant aux parois 28 et 30) d'un plat 34 destiné à son montage sur le silo.

Le couvercle 26, quant à lui, comporte une paroi cylindrique 36 s'étendant en vis-à-vis de la paroi de fond 28 de la gaine 24 et de dimensions homologues de celles de la partie ouverte de la gaine. La paroi 36 est prolongée vers l'extérieur en 38 pour permettre son boulonnage sur les plats 32 en vis-à-vis de la gaine 24.

Avantageusement, le couvercle est pourvu de nervures opposées 40 formées sur toute sa longueur, et il est terminé en partie inférieure par un retour 42 permettant sa fixation au toit du silo, de la même manière que pour le plat 34 de la gaine, mais indépendamment de celle-ci de manière à pouvoir démonter le couvercle isolément, la gaine restant en place.

L'ensemble gaine-couvercle une fois assemblé définit un cornet courbé permettant de dévier verticalement vers le bas le flux horizontal de produit pulvérulent depuis la conduite de transfert (à l'extrémité amont 44) vers l'entrée du silo (à l'extrémité aval 48).

D'autre part et surtout, compte tenu de la section progressivement croissante du volume intérieur 48 situé entre les deux extrémités du raccord, par effet de tuyère la vitesse du produit pulvérulent va se trouver fortement abaissée, par exemple de 30 m/s à 9 m/s, avec tous les avantages corrélatifs qui ont été exposés plus haut.

Par exemple, et sans que ces valeurs aient aucun caractère limitatif, on peut réaliser un tel raccord assurant une transition depuis une extrémité amont 44 de dimensions 200 x 200 mm, reliée à une conduite de dépotage de diamètre 100 mm, jusqu'à une extrémité aval 46 de dimensions 610 x 610 mm. Les rayons de courbure des parois cylindriques sont de préférence constants, avec par exemple un extrados 50 formé en donnant un rayon de courbure de 2100 mm au couvercle 36, et un intrados 52 formé en donnant un rayon de courbure de 1500 mm à la paroi de fond 28 de la gaine 24.

Comme on le comprendra aisément, les valeurs numériques données ci-dessus ne sont qu'indicatives et, selon les différents paramètres (nature du produit, dimensions de la conduite et du silo, pression et vitesse de transfert, etc.) il est possible de modifier le rayon de courbure du coude, le profil de variation de la section transversale et les dimensions au débouché du raccord dans le silo pour ajuster la vitesse de sortie et adapter l'installation aux besoins particuliers.

La gaine et le couvercle sont réalisés par exemple en tôle d'acier inoxydable d'épaisseur 4 ou 5 mm, décapée et passivée. En fonction du caractère plus ou moins corrosif ou mécaniquement agressif du produit pulvérulent, il est possible de réaliser le couvercle en une tôle de plus forte épaisseur que la gaine, et/ou dans un matériau plus résistant.

Le couvercle 26 peut être démonté indépendamment de la gaine pour entretien et maintenance, ou même éventuellement remplacé, le couvercle étant alors considéré comme une pièce d'usure du raccord en effet, comme le couvercle 26 est situé du côté de l'extrados 50, c'est lui qui est le plus exposée à la corrosion et à l'érosion par le produit dépoté en sortie de la conduite de transfert ; son usure est bien plus rapide que celle des parois latérales ou de fond de la gaine 24, qui n'exige pas un remplacement aussi fréquent.

Divers perfectionnements et variantes peuvent être apportés au mode de réalisation que l'on vient de décrire.

Ainsi, les nervures 40 formées sur le couvercle 26 peuvent servir non seulement au renforcement mécanique de ce dernier, mais également définir entre elles un espace 54 garni si nécessaire d'un matériau de renfort permettant d'augmenter la rigidité mécanique et/ou de réduire les nuisances sonores et vibratoires. Il est ainsi possible par exemple de couler un béton entre les nervures 40, celles-ci faisant office de paroi de coffrage et donnant au couvercle un caractère beaucoup plus massif.

Par ailleurs, un déflecteur 56 (figure 3) peut être installé en sortie du raccord coudé, en prolongeant le couvercle 26 du côté de l'extrados 50 au-delà du débouché de la partie aval 46 du raccord. Ce déflecteur permet de diriger le produit vers une zone particulière du silo et/ou d'améliorer la répartition du produit dépoté. Avantageusement, il est solidaire du couvercle, donc démontable en même temps que ce demier, et pourra être considéré comme une pièce d'usure pouvant être changée facilement, indépendamment du raccord et sans démontage de la gaine - ce qui serait impossible avec un simple tube pénétrant directement dans le silo au sommet de celui-ci.

## Revendications

1. Un raccord de dépotage pour un système d'alimentation pneumatique d'un silo de stockage de produit pulvérulent, ce raccord (10) étant un raccord coudé comportant un élément tubulaire courbe avec une partie amont, comprenant une bouche d'entrée (44) apte à être reliée à une conduite de transfert pressurisée (14), et une partie aval, comprenant une bouche de sortie (46) apte à être montée en partie supérieure (22) du silo (12) pour mise en communication avec le volume intérieur de celui-ci,
raccord **caractérisé en ce que** l'élément tubulaire présente transversalement un contour fermé de section (48) variable, régulièrement croissante de la partie amont vers la partie aval.

2. Le raccord de la revendication 1, où la section transversale de l'élément tubulaire est une section carrée (48).

3. Le raccord de la revendication 1, où l'élément tubulaire courbe est un élément coudé à 90° s'étendant dans un plan vertical, avec la bouche d'entrée orientée horizontalement et la bouche de sortie orientée verticalement vers le bas.

4. Le raccord de la revendication 1, où l'élément tubulaire courbe présente un rayon de courbure d'intrados (52) et un rayon de courbure d'extrados (50) constants.

5. Le raccord de la revendication 1, comprenant d'une part une gaine (24) définissant une paroi de fond (28) et des parois latérales (30) de l'élément tubulaire courbe et d'autre part un couvercle amovible (26) définissant une paroi supérieure (36) de l'élément tubulaire courbe, gaine et couvercle comprenant des moyens démontables (32, 38) de solidarisation mutuelle.

6. Le raccord de la revendication 5, où la gaine (24) et le couvercle amovible (26) comprennent chacun des moyens respectifs (34, 42) de solidarisation à la partie supérieure (22) du silo (12).

7. Le raccord de la revendication 5, où le couvercle amovible (26) est disposé du côté de l'extrados (50) de l'élément tubulaire.

8. Le raccord de la revendication 7, où le couvercle amovible (26) comporte sur sa face d'extrados (50) au moins une nervure continue (40) s'étendant dans un plan radial perpendiculairement à la surface du couvercle.

9. Le raccord de la revendication 8, où le couvercle amovible (26) comporte deux nervures opposées (40) définissant entre elles un espace (54) garni d'un matériau de renfort.

10. Le raccord de la revendication 9, où le matériau de renfort est un béton coulé entre les nervures formant parois de coffrage en vis-à-vis.

11. Le raccord de la revendication 5, où le matériau du couvercle amovible (26) est un matériau présentant une résistance mécanique plus élevée que celle du matériau de la gaine (24).

12. Le raccord de la revendication 5, où l'épaisseur de la paroi supérieure (36) définie par le couvercle amovible (26) est plus élevée que l'épaisseur de la paroi de fond (28) et des parois latérales (30) définies par la gaine (24).

13. Le raccord de la revendication 1, où l'élément tubulaire coudé est prolongé par un déflecteur (56) s'étendant côté extrados au-delà de la bouche de sortie (46).

14. Le raccord des revendications 7 et 13 prises en combinaison, où le déflecteur (56) est solidaire du couvercle amovible (26).
